# DEMANDE DE BREVET EUROPEEN

(11) **EP 4 389 554 A1**
(43) Date de publication de la demande: **26.06.2024**
(21) Numéro de dépôt: 23218440.8
(22) Date de dépôt: 20.12.2023
(51) Int. Cl.: B61C 3/02, B61C 17/02, B61C 17/06, B60L 50/70, B61C 7/04

(54) **SYSTÈME DE PRODUCTION D'ÉLECTRICITÉ, ENSEMBLE DE PRODUCTION D'ÉLECTRICITÉ COMPRENANT UN TEL SYSTÈME DE PRODUCTION D'ÉLECTRICITÉ, ET TRAIN COMPRENANT UN TEL ENSEMBLE DE PRODUCTION D'ÉLECTRICITÉ**

(30) Priorité: 20.12.2022 FR 2213962
(71) Demandeur: ALSTOM Holdings, 93400 Saint-Ouen-sur-Seine (FR)
(72) Inventeur: CEBE, Christian, 90000 Belfort (FR); VANDAMME, Thibault, 90000 Belfort (FR); CHIARANDINI, Bruno, 90000 Belfort (FR); TOURNIER, Thierry, 90000 Belfort (FR)
(74) Mandataire: Lavoix

(57) **Abrégé**

Le système de production d'électricité est configuré pour être embarqué sur une remorque (8) possédant un châssis (16). Il est de construction modulaire et comprend un module de stockage de fluide (20) comprenant un dispositif de stockage de fluide (22), et un module de production d'électricité (24) comprenant un dispositif de production d'électricité (26) configuré pour produire de l'électricité à partir du ou des fluides stockés dans le dispositif de stockage de fluide (22), le module de stockage de fluide (20) et le module de production d'électricité (24) étant configurés pour être montés sur le châssis (16) de la remorque (8), le module de stockage de fluide (20) étant configuré pour être monté de manière amovible sur le châssis (16) séparément du module de production d'électricité (24).

## Description

La présente invention concerne le domaine de l'alimentation en électricité d'un véhicule moteur à traction électrique, et en particulier un système de production d'électricité pour un tel véhicule moteur.

Un des buts de l'invention est de proposer un système de production d'électricité qui soit fiable, facile d'utilisation et qui permette une grande autonomie.

A cet effet, l'invention propose un système de production d'électricité configuré pour être embarqué sur une remorque possédant un châssis, le système de production d'électricité étant de construction modulaire et comprenant un module de stockage de fluide comprenant un dispositif de stockage de fluide et un module de production d'électricité comprenant un dispositif de production d'électricité configuré pour produire de l'électricité à partir du ou des fluides stockés dans le dispositif de stockage de fluide, le module de stockage de fluide et le module de production d'électricité étant configurés pour être montés sur le châssis de la remorque, le module de stockage de fluide étant distinct du module de production d'électricité et configuré pour être monté de manière amovible sur le châssis de la remorque séparément du module de production d'électricité.

La prévision d'un système de production d'électricité configuré pour être embarqué sur une remorque permet d'atteler la remorque à un véhicule moteur à traction électrique, i.e. un véhicule comprenant au moins un moteur électrique pour assurer l'entraînement du véhicule, pour alimenter le véhicule moteur en énergie électrique à partir de la remorque.

Le dispositif de production d'électricité configuré pour produire de l'électricité à partir d'au moins un fluide stocké dans un module de stockage de fluide permet une grande autonomie.

La prévision du module de stockage de fluide sur la remorque permet d'embarquer une grande quantité de fluide, ce qui permet une grande autonomie d'un véhicule moteur auquel est associé le système de production d'électricité.

Le module de stockage de fluide configuré pour être monté sur la remorque et retiré de la remorque séparément du module de production d'électricité contenant l'unité de production d'électricité, permet un réapprovisionnement rapide du système de production d'électricité en fluide nécessaire au fonctionnement du dispositif de production d'électricité, par exemple en remplaçant un module de stockage de fluide dont le dispositif de stockage de fluide est vide par un autre module de stockage de fluide dont le dispositif de stockage de fluide est plein.

Selon des modes de réalisation particuliers, le système de production d'électricité comprend un ou plusieurs des caractéristiques optionnelles suivantes, prises individuellement ou selon toutes les combinaisons techniquement possibles :
- le module de stockage de fluide comprend un conteneur de transport, le dispositif de stockage de fluide étant installé dans le conteneur de transport ;
- le conteneur de transport du module de stockage de fluide est un conteneur de transport normalisé ;
- le module de production d'électricité est configuré pour être monté de manière amovible sur le châssis de la remorque ;
- le module de production d'électricité comprend un conteneur de transport, le dispositif de production d'électricité étant installé dans le conteneur de transport du module de production d'électricité ;
- le conteneur de transport du module de production d'électricité est un conteneur de transport normalisé ;
- il comprend un dispositif de stockage d'électricité pour le stockage d'électricité produite par le dispositif de production d'électricité ;
- le dispositif de stockage d'électricité est intégré dans le module de production d'électricité ou dans un module additionnel distinct du module de stockage de fluide et du module de production d'électricité, le module additionnel étant de préférence configuré pour être monté de manière amovible sur le châssis de la remorque ;
- il comprend un dispositif de transformation d'électricité configuré pour la transformation de l'électricité produite par le dispositif de production d'électricité ;
- le dispositif de transformation électrique est intégré dans le module de production d'électricité ou dans un module additionnel distinct du module de stockage de fluide et du module de production d'électricité, le module additionnel étant de préférence configuré pour être monté de manière amovible sur le châssis de la remorque ;
- le dispositif de production d'électricité est configuré pour produire de l'électricité par mise en oeuvre d'une réaction d'oxydoréduction à partir du ou des fluides stockés dans le dispositif de stockage de fluide ;
- le dispositif de production d'électricité comprend au moins une pile à combustible ;
- chaque pile à combustible est du type hydrogène/oxygène ou du type hydrogène/air.

L'invention concerne aussi un ensemble de production d'électricité comprenant une remorque possédant un châssis et un système de production d'électricité tel que défini ci-dessus, embarqué sur la remorque.

L'invention concerne en outre un train comprenant un véhicule moteur possédant au moins un moteur électrique de traction, et, en outre, un ensemble de production d'électricité tel que défini ci-dessus, dont la remorque est attelée au véhicule moteur et le système de production d'électricité est connecté au véhicule moteur pour l'alimentation en énergie électrique de chaque moteur électrique de traction.

L'invention et ses avantages seront mieux compris à la lecture de la description qui va suivre, donnée uniquement à titre d'exemple non limitatif, et faite en référence aux dessins annexés, sur lesquels :
- la Figure 1 est une vue schématique de côté d'un train comprenant un véhicule moteur à traction électrique auquel est attelé une remorque sur laquelle est embarqué un système de production d'électricité pour la fourniture d'électricité au véhicule moteur ;
- la Figure 2 est une vue schématique plus détaillée de la remorque et du système de production d'électricité embarqué sur la remorque ;
- la Figure 3 est une vue schématique de côté illustrant le montage du système de production d'électricité embarqué sur la remorque.
- la Figure 4 est une vue schématique de côté illustrant le montage d'un autre système de production d'électricité embarqué sur la remorque.

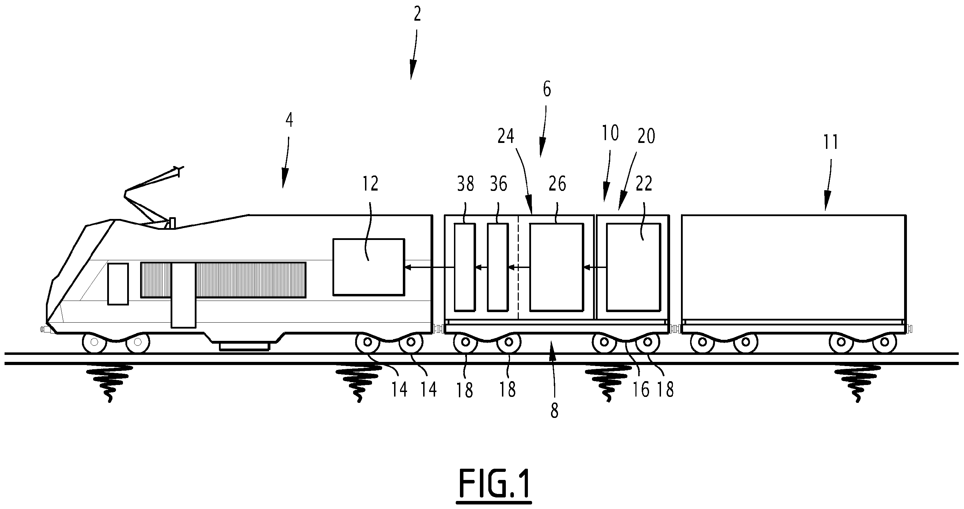

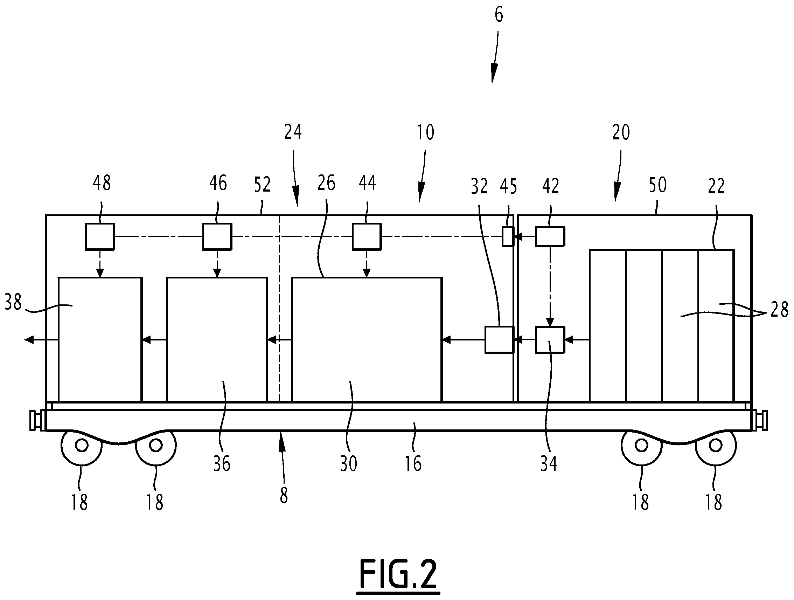

En référence aux Figures 1 et 2, un train 2 comprend un véhicule moteur 4 et un ensemble de production d'électricité 6, l'ensemble de production d'électricité 6 comprenant une remorque 8 attelée au véhicule moteur 4 et un système de production d'électricité 10 configuré pour la production d'électricité, le système de production d'électricité 10 étant embarqué sur la remorque 8.

Le train 2 est par exemple un train ferroviaire prévu pour rouler sur une voie de chemin de fer. Le véhicule moteur 4 et la remorque 8 sont alors aussi des véhicules ferroviaires, plus particulièrement un véhicule moteur 4 ferroviaire et une remorque 8 ferroviaire.

Le train 2 comprend en option un ou plusieurs véhicules additionnels 11. Un véhicule additionnel 11 attelé à la remorque 8 est représenté sur la Figure 1. En variante, plusieurs véhicules additionnels 11 peuvent être prévus. Chaque véhicule additionnel 11 est par exemple un véhicule de transport de passagers et/ou de transport de marchandises.

Le véhicule moteur 4 est configuré pour générer une force motrice et entraîner les autres véhicules du train 2 dans lequel le véhicule moteur 4 est intégré, y inclus la remorque 8.

Le véhicule moteur 4 est à traction électrique. Le véhicule moteur 4 est configuré pour utiliser de l'énergie électrique pour générer la force motrice assurant l'entraînement du véhicule moteur 4.

Le véhicule moteur 4 comprend par exemple au moins un moteur électrique de traction ou moteur électrique d'entrainement 12, configuré pour générer la force motrice et assurer l'entraînement du véhicule moteur 4.

Le véhicule moteur 4 comprend au moins un essieu 14 qui est moteur. Chaque essieu 14 moteur est couplé à un moteur électrique d'entrainement 12 du véhicule moteur 4.

Le véhicule moteur 4 est par exemple un véhicule tracteur, en particulier une locomotive. Dans ce cas, le véhicule moteur 4 est uniquement destiné à entraîner les autres véhicules du train 2 dans lequel le véhicule moteur 4 est intégré. En variante, le véhicule moteur 4 est configuré pour le transport de passagers et/ou pour le transport de marchandises.

La remorque 8 est un véhicule tracté. La remorque 8 est dépourvue de moteur prévu pour générer une force motrice pour assurer l'entraînement de la remorque 8.

La remorque 8 est configurée pour être attelée au véhicule moteur 4 pour former un train 2 dans lequel la remorque 8 est entraînée par le véhicule moteur 4.

La remorque 8 possède un châssis 16 et au moins un essieu 18, le châssis 16 de la remorque 8 reposant sur chaque essieu 18 de la remorque 8. Chaque essieu 18 de la remorque 8 est non-moteur.

Le système de production d'électricité 10 est configuré pour produire de l'électricité à partir d'au moins un fluide et pour alimenter le véhicule moteur 4 en électricité nécessaire pour générer la force motrice.

Le système de production d'électricité 10 est de construction modulaire. Il comprend plusieurs modules distincts, configurés pour être sélectivement associés pour former le système de production d'électricité 10 ou séparés.

Les modules sont raccordables fluidiquement et/ou électriquement entre eux, de manière amovible, pour former le système de production d'électricité 10.

De préférence, au moins un des modules est configuré pour être monté de manière amovible sur la remorque 8. En particulier, chaque module est configuré pour être monté de manière amovible sur la remorque 8.

Chaque module configuré pour être monté de manière amovible sur la remorque 8 est transportable comme une seule unité, par exemple à l'aide d'un outil de levage, tel qu'une grue, un pont roulant ou un chariot élévateur.

De préférence, chaque module du système de production d'électricité 10 est interchangeable avec un autre module du même type ou identique. Ainsi, un module défectueux peut être interchangé rapidement avec un module du même type ou identique, simplement en retirant le module défectueux de la remorque 8 et en le remplaçant par un autre module opérationnel.

Le système de production d'électricité 10 comprend un module de stockage de fluide 20 comprenant un dispositif de stockage de fluide 22 configuré pour le stockage d'un ou plusieurs fluides.

Le système de production d'électricité 10 comprend un module de production d'électricité 24 comprenant un dispositif de production d'électricité 26 configuré pour produire de l'électricité à partir du ou des fluides stockés dans le dispositif de stockage de fluide 22.

Le module de stockage de fluide 20 et le module de production d'électricité 24 sont distincts.

Comme illustré sur la Figure 2, le dispositif de stockage de fluide 22 comprend de préférence au moins un réservoir 28, chaque réservoir 28 étant configuré pour le stockage d'un fluide utilisé par le dispositif de production d'électricité 26 pour produire de l'électricité.

Le dispositif de stockage de fluide 22 comprend de préférence plusieurs réservoirs 28, disposés par exemple côte-à-côte.

Le dispositif de production d'électricité 26 est par exemple configuré pour la production d'électricité par mise en oeuvre d'une réaction d'oxydoréduction entre un combustible contenu dans un fluide combustible et un comburant contenu dans un fluide comburant.

Chaque réservoir 28 du dispositif de stockage de fluide 22 est alors configuré pour recevoir du fluide comburant contenant le comburant ou du fluide combustible contenant le combustible.

Le dispositif de production d'électricité 26 est par exemple configuré pour utiliser du dihydrogène comme combustible et du dioxygène comme comburant. Le fluide combustible est par exemple du dihydrogène. Le fluide comburant est par exemple du dioxygène ou de l'air, qui contient du dioxygène.

Dans un exemple, le dispositif de production d'électricité 26 est configuré pour générer de l'électricité par mise en oeuvre d'une réaction d'oxydoréduction en utilisant du dihydrogène comme fluide combustible et de l'air comme fluide comburant.

Dans ce cas, le dispositif de stockage de fluide 22 stocke par exemple le dihydrogène nécessaire à la mise en oeuvre de la réaction d'oxydoréduction, l'air nécessaire à la mise en oeuvre de la réaction d'oxydoréduction étant prélevé dans l'air environnant. De préférence, chaque réservoir 28 reçoit alors du dihydrogène.

En variante, le dispositif de production d'électricité 26 est configuré pour générer de l'électricité par mise en oeuvre d'une réaction d'oxydoréduction entre du dihydrogène utilisé comme fluide combustible et du dioxygène utilisé comme fluide comburant.

Dans ce cas, le dispositif de stockage de fluide 22 stocke par exemple du dihydrogène nécessaire à la mise en oeuvre de la réaction d'oxydoréduction et du dioxygène nécessaires à la mise en oeuvre de la réaction d'oxydoréduction. De préférence, au moins un réservoir 28 reçoit du dihydrogène et au moins un réservoir 28 reçoit du dioxygène.

Le dispositif de production d'électricité 26 comprend par exemple une ou plusieurs piles à combustible 30.

Chaque pile à combustible 30 est un réacteur électrochimique configuré pour réaliser une réaction d'oxydoréduction entre un combustible contenu dans un fluide combustible et un comburant contenu dans un fluide combustible.

Chaque pile à combustible 30 est par exemple configurée pour utiliser du dihydrogène comme combustible et du dioxygène comme comburant.

Dans un exemple, chaque pile à combustible 30 est une pile à combustible hydrogène/air utilisant du dihydrogène comme fluide combustible et de l'air comme fluide comburant.

En variante, chaque pile à combustible 30 est une pile à combustible hydrogène/oxygène utilisant du dihydrogène comme fluide combustible et du dioxygène comme fluide comburant.

Le système de production d'électricité 10 comprend un dispositif de raccordement fluidique 32 configuré pour le raccordement fluidique amovible du dispositif de production d'électricité 26 et du dispositif de stockage de fluide 22.

Le dispositif de raccordement fluidique 32 est configuré pour sélectivement raccorder ou séparer fluidiquement le dispositif de production d'électricité 26 et le dispositif de stockage de fluide 22.

Le dispositif de raccordement fluidique 32 est configuré pour l'alimentation du dispositif de production d'électricité 26 avec chaque fluide stocké dans le dispositif de stockage de fluide 22 et nécessaire à la production d'électricité, lorsque le dispositif de raccordement fluidique 32 raccorde le dispositif de production d'électricité 26 au le dispositif de stockage de fluide 22.

Optionnellement, le système de production d'électricité 10 comprend un dispositif de distribution 34 configuré pour distribuer le ou les fluides stockés dans le dispositif de stockage de fluide 22 au dispositif de production d'électricité 26 de manière contrôlée.

Le dispositif de distribution 34 possède les composants nécessaires au contrôle de la circulation du ou des fluides du dispositif de stockage de fluide 22 vers le dispositif de production d'électricité 26.

Ces composants incluent par exemple des tuyaux, des raccords, des détendeurs, des vannes et/ou des capteurs, par exemple des capteurs de pressions et/ou des capteurs de débit.

Le dispositif de distribution 34 est par exemple intégré dans le module de stockage de fluide 20.

Le dispositif de raccordement fluidique 32 est par exemple disposé fluidiquement entre le dispositif de distribution 34 et le dispositif de production d'électricité 26.

Optionnellement, le système de production d'électricité 10 comprend un dispositif de stockage d'électricité 36 configuré pour le stockage d'électricité produite par le dispositif de production d'électricité 26.

Le dispositif de stockage d'électricité 36 permet le stockage de l'électricité produite par le dispositif de production d'électricité 26, puis, ultérieurement, l'utilisation de cette électricité pour alimenter le véhicule moteur 4 en électricité.

Le dispositif de stockage d'électricité 36 comprend par exemple un ou plusieurs accumulateurs électriques. Chaque accumulateur électrique est de préférence un accumulateur électrochimique.

Optionnellement, le système de production d'électricité 10 comprend un dispositif de transformation d'électricité 38 configuré pour modifier la tension, l'intensité et/ou le type de courant (continu ou alternatif) de l'électricité produite par le dispositif de production d'électricité 26 et/ou, le cas échéant, de l'électricité stockée dans le dispositif de stockage d'électricité 36, en vue de son utilisation par le véhicule moteur 4.

La transformation de l'électricité produite par le dispositif de production d'électricité 26 ou stockée dans le dispositif de stockage d'électricité 36 permet d'adapter les caractéristiques de l'électricité produite par le dispositif de production d'électricité 26 à celles de l'électricité nécessaire à l'alimentation en électricité du véhicule moteur 4, en particulier de chaque moteur électrique d'entraînement 12 du véhicule moteur 4.

Le dispositif de transformation d'électricité 38 comprend par exemple un ou des transformateurs électriques pour modifier la tension, l'intensité et/ou le type du courant (courant alternatif et/ou courant continu) de l'électricité produite par le dispositif de production d'électricité 26 ou éventuellement stockée dans le dispositif de stockage d'électricité 36.

Le dispositif de transformation d'électricité 38 est par exemple configuré pour être raccordé électriquement entre le dispositif de stockage d'électricité 36 et le véhicule moteur 4.

Le dispositif de stockage d'électricité 36 est par exemple disposé électriquement entre le dispositif de production d'électricité 26 et le dispositif de transformation d'électricité 38.

Le système de production d'électricité 10 comprend une ou plusieurs unités de commande électroniques pour commander le dispositif de stockage de fluide 22, le dispositif de production d'électricité 26, le cas échéant, le dispositif de stockage d'électricité 36, et, le cas échéant, le dispositif de transformation d'électricité 38.

Le système de production d'électricité 10 comprend par exemple une unité de commande électronique de distribution 42 configurée pour commander le dispositif de distribution 34. De préférence, l'unité de commande électronique de distribution 42 est installée dans le module de stockage de fluide 20.

Le système de production d'électricité 10 comprend par exemple une unité de commande électronique de production 44 configurée pour commander le dispositif de production d'électricité 26. De préférence, l'unité de commande électronique de production 44 est installée dans le module de production d'électricité 24.

De préférence, le système de production d'électricité 10 est configuré pour la connexion électrique amovible du module de stockage de fluide 20 et du module de production d'électricité 24, en particulier en vue de la connexion électrique de l'unité de commande électronique de distribution 42 et de l'unité de commande électronique de production 44, par exemple à l'aide un dispositif de connexion électrique 45.

Le système de production d'électricité 10 comprend par exemple une unité de commande électronique de stockage 46 configurée pour commander le dispositif de stockage d'électricité 36.

Le système de production d'électricité 10 comprend par exemple une unité de commande électronique de transformation 48 configurée pour commander le dispositif de transformation d'électricité 38.

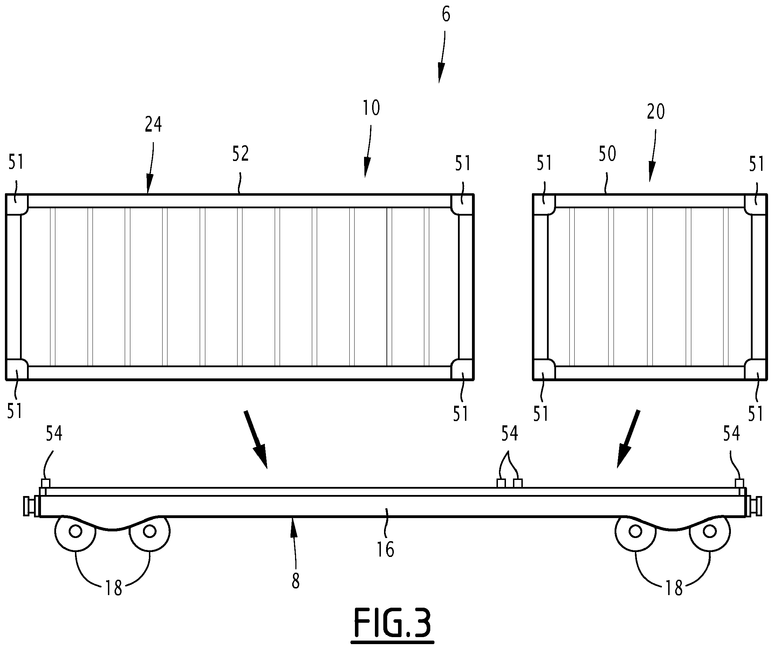

Comme illustré sur la Figure 3, le module de stockage de fluide 20 est configuré pour être monté de manière amovible sur le châssis 16 de la remorque 8.

Le module de stockage de fluide 20 est transportable comme une seule unité, pour être chargé sur la remorque 8 ou retiré de la remorque 8, par exemple à l'aide d'un outil de levage, tel qu'une grue, un pont roulant ou un chariot élévateur.

Le module de stockage de fluide 20 est configuré pour être monté sur le châssis 16 et retiré du châssis 16 de la remorque 8 séparément du module de production d'électricité 24.

En particulier, le module de stockage de fluide 20 est configuré pour pouvoir être monté sur le châssis 16 de la remorque 8 et retiré du châssis 16 de la remorque 8 tout en laissant le module de production d'électricité 24 sur le châssis 16 de la remorque 8.

De préférence, le module de stockage de fluide 20 comprend un conteneur de transport 50, le dispositif de stockage de fluide 22 étant installé dans le conteneur de transport 50 du module de stockage de fluide 20.

Le conteneur de transport 50 du module de stockage de fluide 20 est configuré pour permettre le transport du module de stockage de fluide 20 incluant le dispositif de stockage de fluide 22 installé dans le conteneur de transport 50 du module de stockage de fluide 20.

Le conteneur de transport 50 est transportable, par exemple à l'aide d'un outil de levage, tel qu'une grue, un pont roulant ou un chariot élévateur.

Le conteneur de transport 50 est de préférence un conteneur de transport normalisé.

Un « conteneur de transport normalisé » désigne un conteneur spécifiquement conçu pour le transport routier, ferroviaire et/ou maritime. Un tel conteneur est aussi appelé « conteneur de transport international » ou « conteneur de transport intermodal » ou « conteneur de transport maritime ».

Un conteneur de transport normalisé est par exemple conforme à la norme ISO 668 et/ou à la norme ISO 1496.

Chaque conteneur de transport normalisé possède des pièces de coin 51 situées aux huit sommets d'un parallélépipède rectangle. Ces pièces de coin 51 sont espacées de manière précise et présentent des ouvertures d'ancrage normalisées, conformes par exemple à la norme ISO 1161. Ces pièces de coin 51 servent à l'arrimage des conteneurs de transport normalisés et/ou à la fixation des conteneurs de transport normalisé entre eux.

Chaque conteneur de transport normalisé peut présenter une longueur de 10 pieds, 20 pieds, 30 pieds, 40 pieds ou 45 pieds. De manière connue, 1 pied correspond à 30,48 cm.

La remorque 8 est avantageusement une remorque porte-conteneur, i.e. une remorque configurée pour recevoir des conteneurs de transport normalisés.

A cet effet, le châssis 16 de la remorque 8 est par exemple muni de dispositifs d'arrimage 54 configurés pour coopérer avec des pièces de coins 51 d'un conteneur de transport normalisé posé sur la remorque 8 pour arrimer le conteneur de transport normalisé sur la remorque 8.

Optionnellement, le module de production d'électricité 24 est également configuré pour être monté de manière amovible sur le châssis 16 de la remorque 8.

De préférence, le module de production d'électricité 24 est transportable comme une seule unité pour être chargé sur la remorque 8 ou retiré de la remorque 8, par exemple à l'aide d'un outil de levage, tel qu'une grue, un pont roulant ou un chariot élévateur
Le module de production d'électricité 24 est configuré pour être monté de manière amovible sur le châssis 16 de la remorque 8 séparément du module de stockage de fluide 20.

En particulier, le module de production d'électricité 24 est configuré pour être monté sur le châssis 16 de la remorque 8 et retiré du châssis 14 de la remorque 8 tout en laissant le module de stockage de fluide 20 sur le châssis 14 de la remorque 8
Le module de production d'électricité 24 comprend par exemple un conteneur de transport 52, le dispositif de production d'électricité 26 étant installé dans le conteneur de transport 52. Le conteneur transport 52 est de préférence un conteneur de transport normalisé.

Si un dispositif de stockage d'électricité 36 est prévu, le dispositif de stockage d'électricité 36 est par exemple intégré dans le module de production d'électricité 24. En particulier, le dispositif de stockage d'électricité 36 est installé dans le conteneur de production 52 dans lequel est installé le dispositif de production d'électricité 26.

Si un dispositif de transformation d'électricité 38 est prévu, le dispositif de transformation d'électricité 38 est par exemple intégré dans le module de production d'électricité 24. En particulier, le dispositif de transformation d'électricité 38 est installé dans le conteneur de transport 52 dans lequel est disposé le dispositif de production d'électricité 26.

Dans un exemple, le système de production d'électricité 10 comprend exactement deux modules, chacun configuré pour être monté de manière amovible sur la remorque 8, à savoir le module de stockage de fluide 20 comprenant le conteneur de transport 50 dans lequel est installé le dispositif de stockage de fluide 22, et le module de production d'électricité 24 comprenant le conteneur de transport 52 dans lequel est installé le dispositif de production d'électricité 26, ainsi que, optionnellement, le dispositif de stockage d'électricité 36 et/ou le dispositif de transformation d'électricité 38.

Dans un exemple, le conteneur de transport 50 du module de stockage de fluide 20 possède une longueur de 10 pieds ou de 20 pieds et le conteneur de transport 52 du module de production d'électricité 24 possède une longueur de 30 pieds, 40 pieds ou 45 pieds.

Dans un exemple de réalisation particulier, le conteneur de transport 50 du module de stockage de fluide 20 possède une longueur de 20 pieds et le conteneur de transport 52 du module de production d'électricité 24 possède possédant une longueur de 30 pieds ou 40 pieds.

Ceci permet d'utiliser une remorque 8 porte-conteneur d'une longueur de 50 pieds ou 60 pieds, pouvant recevoir le conteneur de transport 50 du module de stockage de fluide 20 et le conteneur de transport 52 du module de production d'électricité 24 disposés l'un derrière l'autre sur le châssis 16 de la remorque 8.

Il est possible de prévoir plus de deux modules, par exemple en prévoyant au moins module additionnel distinct du module de stockage de fluide et du module de production d'électricité.

Chaque module additionnel est de préférence configuré pour être transportable come une seule unité, par exemple par un outil de levage, et pour pouvoir être monté sur la remorque 8 et retiré de la remorque 8 séparément du module de stockage de fluide 20 et du module de production d'électricité 24.

Chaque module additionnel comprend par exemple un conteneur de transport, qui est de préférence un conteneur de transport normalisé.

Le système de production d'électricité 10 comprend par exemple au moins un module additionnel comprenant un dispositif de stockage d'électricité 36 et/ou un dispositif de transformation d'électricité 38.

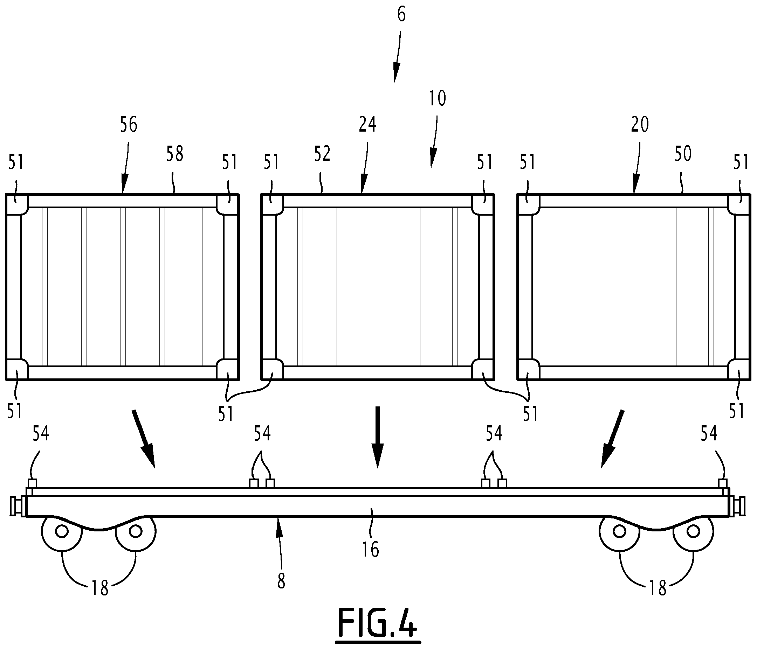

Comme illustré sur la Figure 4, dans un exemple, le système de production d'électricité 10 comprend un module additionnel 56 comprenant un dispositif de stockage d'électricité 36 et/ou un dispositif de transformation d'électricité 38, qui sont de préférence installés dans un conteneur de transport 58, qui est avantageusement normalisé.

Ainsi, le système de production d'électricité 10 comprend trois modules, à savoir le module de stockage de fluide 20 comprenant le dispositif de stockage de fluide 22, le module de production d'électricité 24 comprenant le dispositif de production d'électricité 26, et le module additionnel 56 contenant le dispositif de stockage d'électricité 36 et/ou le dispositif de transformation d'électricité 38.

En particulier, les trois modules (module de stockage de fluide 20, module de production d'électricité 24 et module additionnel 56) comprennent chacun un conteneur de transport normalisé (conteneurs de transport 52, 56, 58), les conteneurs de transport normalisés des trois modules étant propres à être montés les uns derrière les autres sur un châssis 16 d'une remorque ferroviaire 8.

D'autres configurations sont possibles.

Il est par exemple envisageable d'intégrer un dispositif de stockage d'électricité 36 dans le module de production d'électricité 24, et d'intégrer le dispositif de transformation d'électricité 38 dans un module additionnel 54 distinct du module de production d'électricité 24.

Les modules du système de production d'électricité 10 sont configurés pour être raccordés fluidiquement et/ou électriquement entre eux de manière amovible.

En particulier, le module de stockage de fluide 20 et le module de production d'électricité 24 sont configurés pour être raccordé fluidiquement entre eux pour la fourniture du ou des fluides stockés dans le dispositif de stockage de fluide 22 au dispositif de production d'électricité 26, et optionnellement électriquement entre eux, par exemple pour raccordé une unité de commande électronique de distribution et une unité de commande électronique de production.

En fonctionnement, l'ensemble de production d'électricité 6 comprenant la remorque 8 et le système de production d'électricité 10 embarqué sur la remorque 8 est attelé au véhicule moteur 4.

Un ou plusieurs véhicules additionnels sont éventuellement attelés à la remorque 8 et/ou au véhicule moteur 4.

Le véhicule moteur 4, la remorque 8 et le ou les éventuels véhicules additionnels forment le train 2.

Le dispositif de production d'électricité 26 produit de l'électricité à partir du ou des fluides stockés dans le dispositif de stockage de fluide 22 et fournit l'électricité au véhicule moteur 4, éventuellement via le dispositif de stockage d'électricité 36 et/ou le dispositif de transformation d'électricité 38.

Lors d'un arrêt du train 2, si la quantité de fluide stockée dans le dispositif de stockage de fluide 22 est insuffisante, il est possible de déconnecter le module de stockage de fluide 20 du module de production d'électricité 24, et de remplacer le module de stockage de fluide 20 par un autre module de stockage de fluide 20 contenant suffisamment de fluide.

Cette opération peut être réalisée simplement et rapidement, en manipulant le module de stockage de fluide à l'aide d'un outil de levage.

Il n'est pas nécessaire de disposer d'une station de remplissage pour remplir le dispositif de stockage de fluide 22. Il suffit de disposer d'un module de stockage de fluide 20 de remplacement dont le dispositif de stockage de fluide 22 est rempli.

La prévision d'un module de production d'électricité 24 également monté de manière amovible sur la remorque 8 et configuré pour être raccordé de manière amovible au module de stockage de fluide 20 permet par exemple un remplacement rapide d'un module de production d'électricité 24 défaillant par un autre module de production d'électricité 24 opérationnel. Ceci évite d'immobiliser le train 2 pour effectuer une réparation sur un module de production d'électricité 24 défaillant.

La construction modulaire du système de production d'électricité 10 permet de séparer les différentes fonctions du système de production d'électricité 10 pour pouvoir changer chaque module contenant un dispositif défaillant.

L'invention n'est pas limitée aux exemples et aux variantes indiquées ci-dessus. D'autres exemples et d'autres variantes sont envisageables.

En particulier, l'invention n'est pas limitée au domaine ferroviaire, mais s'applique à d'autre domaines, par exemple le domaine routier. Dans ce cas, le véhicule moteur 4 est un véhicule routier et la remorque est une remorque routière.

Par ailleurs, des unités de commande électroniques séparées ont été illustrées sur la Figure 2 pour les différents dispositifs du système de production d'électricité (dispositif de stockage de fluide, dispositif de production d'électricité, dispositif de stockage d'électricité et dispositif de transformation d'électricité).

Des unités de commandes électroniques d'au moins deux dispositifs peuvent être réunies dans un même calculateur de commande, en particulier lorsque les deux dispositifs sont intégrés dans un même module du système de production d'électricité 10.

## Revendications

1. Système de production d'électricité configuré pour être embarqué sur une remorque (8) possédant un châssis (16), le système de production d'électricité étant de construction modulaire et comprenant un module de stockage de fluide (20) comprenant un dispositif de stockage de fluide (22) et un module de production d'électricité (24) comprenant un dispositif de production d'électricité (26) configuré pour produire de l'électricité à partir du ou des fluides stockés dans le dispositif de stockage de fluide (22), le module de stockage de fluide (20) et le module de production d'électricité (24) étant configurés pour être montés sur le châssis (16) de la remorque (8), le module de stockage de fluide (20) étant distinct du module de production d'électricité (24) et configuré pour être monté de manière amovible sur le châssis (16) de la remorque (8) séparément du module de production d'électricité (24).

2. Système de production d'électricité selon la revendication 1, dans lequel le module de stockage de fluide (20) comprend un conteneur de transport (50), le dispositif de stockage de fluide (22) étant installé dans le conteneur de transport (50).

3. Système de production d'électricité selon l'une quelconque des revendications précédentes, dans lequel le module de production d'électricité (24) est configuré pour être monté de manière amovible sur le châssis (16) de la remorque (8).

4. Système de production d'électricité selon la revendication 3, dans lequel le module de production d'électricité (24) comprend un conteneur de transport (52), le dispositif de production d'électricité (26) étant installé dans le conteneur de transport (52) du module de production d'électricité (24).

5. Système de production d'électricité selon l'une quelconque des revendications précédentes, comprenant un dispositif de stockage d'électricité (36) pour le stockage d'électricité produite par le dispositif de production d'électricité (24).

6. Système de production d'électricité la revendication 5, dans lequel le dispositif de stockage d'électricité (36) est intégré dans le module de production d'électricité (24) ou dans un module additionnel (56) distinct du module de stockage de fluide (20) et du module de production d'électricité (24), le module additionnel (56) étant de préférence configuré pour être monté de manière amovible sur le châssis (16) de la remorque (8).

7. Système de production d'électricité selon l'une quelconque des revendications précédentes, comprenant un dispositif de transformation d'électricité (38) configuré pour la transformation de l'électricité produite par le dispositif de production d'électricité (24).

8. Système de production d'électricité la revendication 7, dans lequel le dispositif de transformation électrique (38) est intégré dans le module de production d'électricité (24) ou dans un module additionnel (56) distinct du module de stockage de fluide (20) et du module de production d'électricité (24), le module additionnel (56) étant de préférence configuré pour être monté de manière amovible sur le châssis (16) de la remorque (8).

9. Système de production d'électricité selon l'une quelconque des revendications précédentes, dans lequel le dispositif de production d'électricité (26) est configuré pour produire de l'électricité par mise en oeuvre d'une réaction d'oxydoréduction à partir du ou des fluides stockés dans le dispositif de stockage de fluide (22).

10. Système de production d'électricité selon l'une quelconque des revendications précédentes, dans lequel le dispositif de production d'électricité (26) comprend au moins une pile à combustible (30), de préférence du type hydrogène/oxygène ou du type hydrogène/air.

11. Ensemble de production d'électricité comprenant une remorque (8) possédant un châssis et un système de production d'électricité (10) selon l'une quelconque des revendications précédentes, embarqué sur la remorque (8).

12. Train comprenant un véhicule moteur (4) possédant au moins un moteur électrique de traction (12), et, en outre, un ensemble de production d'électricité (6) selon la revendication 11, dont la remorque (8) est attelée au véhicule moteur (4) et le système de production d'électricité (10) est connecté au véhicule moteur (4) pour l'alimentation en énergie électrique de chaque moteur électrique de traction (12).
